Europäisches Patentamt

European Patent Office

Office européen des brevets

(19)

(11) Publication number: **0 255 727**
**A1**

(12) # EUROPEAN PATENT APPLICATION

(21) Application number: 87111400.5

(22) Date of filing: 06.08.87

(51) Int. Cl.4: **C25D 13/10** , **C25D 13/06** , **C09D 5/44**

(30) Priority: 06.08.86 JP 185943/86

(43) Date of publication of application:
**10.02.88 Bulletin 88/06**

(84) Designated Contracting States:
**DE FR GB IT SE**

(71) Applicant: **Nippon Paint Co., Ltd.**
**2-1-2, Oyodokita Oyodo-ku**
**Osaka-shi Osaka-fu(JP)**

(72) Inventor: **Tobinaga, Kenshiroh**
**2-32-5, Yuyamadai**
**Kawanishi-shi Hyogo-ken(JP)**
Inventor: **Obika, Toshimi**
**5-9-10, Sagisu Fukushima-ku**
**Osaka-shi Osaka-fu(JP)**
Inventor: **Sakamoto, Hiroyuki**
**7-9, Kitashowa-cho**
**Nishinomiya-shi Hyogo-ken(JP)**
Inventor: **Tsuchiya, Yasuyuki**
**3-8-23, Kuzuhaasahi**
**Hirakata-shi Osaka-fu(JP)**

(74) Representative: **Hansen, Bernd, Dr.rer.nat. et**
**ai**
**Hoffmann, Eitle & Partner Patentanwälte**
**Arabellastrasse 4**
**D-8000 München 81(DE)**

(54) Process for electrodeposition coating.

(57) Disclosed is a process for electrodeposition coating having crate-preventive features characterized in that a substrate electrocoated in an electrodeposition bath is subjected to a contact with an aqueous solution containing a crater-preventive material satisfying the following formula:
$$|SP_1 - SP_2| > |SP_1 - SP_3| \quad (1)$$
wherein $SP_1$ is a solubility parameter of a crater-causing material; $SP_2$ is a solubility parameter of a film-forming material; and $SP_3$ is a solubility parameter of a crater-preventive material, before baking.

EP 0 255 727 A1

# PROCESS FOR ELECTRODEPOSITION COATING

## Field of the Invention

The present invention relates to a process for electrodeposition coating, especially having crater-preventive features.

## Background of the Invention

The electrodeposition coating method is used widely for the under coating of automobiles, electric home appliances and so on, because it is advantageous over other coating methods not only in both the coating and operating efficiencies but also in providing the coating of relatively uniform thickness and in coating the objects having complex forms.

As one of the disadvantages of the conventional electrodeposition coating method, occurence of craters can be pointed out. The craters adversely affect the corrosion resistance of the electrodeposition coating. The electrodeposition coating containing epoxy resins, which has recently come to be used widely, tends to occur the craters in high possibility.

In order to prevent the problem of the craters, polymers such as the methyl cellulose, ethyl cellulose, polyvinyl butyral, acrylic resin and so on have been commonly formulated into the electrodeposition coating compositions. Such polymers have a function to increase a viscosity of the electrodeposition coating composition so as to prevent materials causing the craters from reaching the surface of the coating.

The above-described method, however, is not a method for eliminating the cause of the craters, and thus such a method does not lead to the final solution of the problem.

## Summary of the Invention

The present inventors have found that the occurrence of the craters can be prevented quite effectively when an electrodeposited substrate is additionally treated with an aqueous solution containing a material which satisfies a specific parameter.

More particularly, the present invention provides a process for electrodeposition coating characterized in that a substrate electrocoated in an electrodeposition bath is subjected to a contact with an aqueous solution containing a crater-preventive material satisfying the following formula:

$$|SP_1 - SP_2| > |SP_1 - SP_3| \quad (1)$$

wherein $SP_1$ is a solubility parameter of a crater-causing material; $SP_2$ is a solubility parameter of a film-forming material; and $SP_3$ is a solubility parameter of a crater-preventive material, before baking.

## Detailed Description of the Invention

The crater is considered to occur due to the difference in surface tension when any low-surface-tension material such as silicone or oil, which can be a crater-causing material, is present in discontinuous form in any coating having higher surface tension (Refer to K. Sato, "Introduction to Physical Properties Engineering of Paints", Riko Shuppan, First Edition, October, 1973). It is believed that the crater-preventive material according to the present invention facilitates the diffusion of said crater-causing material into the crater-preventive material or the film-forming material so that the crater-causing material is changed to continuous from discontinuous.

The crater-preventive material is selected depending on the solubility parameters of various crater-causing materials. The solubility parameters according to the present invention are determined based on the formula of K.W. Suh and J.M. Corbett published in Journal of Applied Science, 12, 2359 (1968). To be specific, a non-solvent (water with a large SP and n-hexane with a small SP) is added to an acetone solution containing a sample to be measured until the acetone solution becomes cloudy and then a volume of the acetone solution is measured. In this case, the SP of the sample can be determined by the following formula:

$$SP = (\sqrt{V_{n\text{-hexane}}} \times SP_{n\text{-hexane}} + \sqrt{V_{water}} \times SP_{water}) / (\sqrt{V_{n\text{-hexane}}} + \sqrt{V_{water}})$$

wherein $V_{n\text{-hexane}}$ is a volume of n-hexane required to make the acetone solution cloudy; $SP_{n\text{-hexane}}$ is SP of n-hexane; $V_{water}$ is a volume of water required until the solution becomes cloudy; and $SP_{water}$ is SP of water. The crater-preventive material according to the present invention is required to meet the following equation:

$$|SP_1 - SP_2| > |SP_1 - SP_3| \quad (1)$$

wherein $SP_1$, $SP_2$ and $SP_3$ respectively represent the same as described previously. And, preferably, said crater-preventive material is desired to satisfy the following equation too:

$$|SP_1 - SP_3| < 1 \quad (2)$$

The left side of Eq.(1) represents the difference in the solubility parameter between the crater-causing material and the coating-film-forming material. The larger this difference, the larger the chances of the occurrence of the craters. Thus, when the difference in the solubility parameter between the crater-causing material and the crater-preventive material is smaller than the solubility parameters of the crater-causing material and the coating-film-forming material, preferably smaller than 1, the crater-causing material diffuses into the crater-preventive material or the coating-film-forming material to prevent the occurrence of the craters by changing its state of presence to the state of continuous presence from its original state of discontinuous presence.

The crater-preventive materials according to the present invention are resins having been water-solubilized. Examples of the resins are polybutadiene, acrylic resin, a polyoxyalkylene, a modified epoxy resin and an aliphatic epoxy compound. For water-solubilization of said materials, one of the publicly known methods which will not adversely affect the electrodeposition coating is selected. More particularly, when the electrodeposition coating is of cationic type, the water-solubilization through the introduction of the amino group is adopted; the water-solubilization through the introduction of carboxyl group is desirable when the electrodeposition coating is of anionic type. Examples of the water-solubilized resins are an aminated polybutadiene, an aminated acrylic resin, a polyoxyalkylene amine, an aminic adduct of aliphatic epoxy, polybutadiene maleate and a carboxylated acrylic resin.

The crater-preventive material is contacted with a substrate which has been electrodeposited in the form of an aqueous solution. When necessary, however, neutralizer may be used. It can be considered to mix the crater-preventive material in electrodeposition bath, but, according to the present invention, the crater-preventive material is brought into contact with the coated substrate, since th crater only occurs when the crater-causing material has reached the surface of coating. Said contact is generally accomplished by spraying the crater-preventive material to the coated substrate or by dipping the coated substrate into an aqueous solution of the crater-preventive material. The contact process normally takes place before a baking and hardening process. Preferably, the contact is desired to be made immediately before the baking and hardening process. The coated substrate is generally baked after the first and second rinse processes. According to the present invention, the coated substrate is preferably subjected to the contact with the crater-preventive material during the second rinse process. Even when the contact between the coating and the crater-preventive material is made at the time of the first rinse process, this will not cause any harm, provided that said contact is made once more immediately before the baking and hardening processes.

The crater-preventive material is present in the aqueous solution within the range from 0.05 to 10 % by weight, preferably from 0.05 to 10 % by weight, and more preferably from 0.05 to 5 % by weight. The concentration below 0.05 % by weight is not desirable, since the concentration of such level is not sufficient in crater-preventive effect. Concentrations over 40 % by weight deteriorate surface smoothness of coating.

The materials causing the craters mentioned herein include silicon, oily components and others in the electrodeposition coating composition.

The film-forming material for the electrodeposition coating according to the present invention may be those commonly used for the electrodeposition coating, and they are not limited to any specific materials. The film-forming materials, for example, may be those described in Japanese Patent Publication No. 49-4058, Laid Open Patent Publication No. 49-99337, No. 51-26225, No. 51-103155, No. 51-117799, No. 52-18746, No. 52-87498, No. 53-43800, No. 53-65327, No. 53-65329, No. 47-759, No. 48-51924, No. 52-11228, No. 54-15936, No. 54-93024, No. 55-31889, No. 55-31890, No. 56-49725, No. 56-71963, No. 57-1126873, No. 57-139147, No. 54-97632 and No. 55-137174.

According to the present invention, the occurrence of the craters is effectively prevented or suppressed by changing the state of presence of the crater-causing material from the state of discontinuous presence to the state of continuous presence, that is, by letting the crater-causing material diffuse or dissolve into the coating film, or by homogenizing the coating.

## Examples

The present invention will be illustrated by the following examples, which, however, are not construed as limiting to their details.

## Reference Example 1

The pigment grinding resin of PTU-30 (The cationic electrodeposition coating composition manufactured by Nippon Paint Co., Ltd.) was mixed with 0.1 % by weight of a silicone (UNC silicone L-7602 (SP = 9.9) manufactured by Nippon Uniker) based on the total amount of resin solids and dispersed by a general process to obtain a paint for electrodeposition coating. This paint was deposited on a substrate served as a cathode at a voltage for 20 microns and the coated substrate was baked at 170 °C for 20 minutes after rinsing and drying. The condition of the coating surface as to the presence or absence of the craters is shown in Table-1.

## Reference Example 2

| Component | Parts by weight (g) |
|---|---|
| Epotohto YD-014[1] | 950 |
| 4-Methoxy-4-methyl pentanone-2 | 330 |
| Antigen 6C[2] | 10 |
| High-diene[3] | 280 |
| Dimethylbenzyl amine | 5 |
| Phthalic anhydride | 150 |

1) Epoxy resin (Tohto Chemical Co., Ltd.)

2) Age resistor (Sumitomo Chemical Co., Ltd.)

3) Synthetic fatty acid (Soken Chemical Co., Ltd.)

Epotohto YD-014 (950g) and 4-methoxy-4-methylpentanone (330g) were charged in a 2 liter beaker with a cooling pipe and stirred until Epotohto YD-014 was uniformly dissolved at a temperature of 120 °C. Then, 10g of antigen 6C was added followed by adding 280g of High-diene and 5g of dimethylbenzyl amine and reacted at 120 °C for four hours. It was confirmed that the acid value of this compound was less than 1. Then, 150g of phthalic anhydride is added and reacted for 2 hours. The resultant varnish had an acid value of 40.

This varnish was mixed with 0.25g of silicone (NUC silicone L7602 of Nippon Uniker), 2g of Noygen EA-150 (Nonion surfactant of Dai-ichi Kogyo Seiyaku Co., Ltd.) and 4g of octyl acid cobalt, and then 12g of diethyl amine and 250g of deionized water were added slowly to form a mixture. One gram of carbon black, 7 g of titanium oxide and 23 g of aluminum silicate were added to the mixture and mixed after adding 637 g of deionized water to form an electrodeposition bath having a solid content of about 20 %. A substrate was electrocoated at a voltage for 20 microns in the electrodeposition bath and baked at 170 °C for 20 minutes after rinsing and drying. The condition of the hardened coating as to the presence or absence of the craters is shown in Table 1.

Example 1

The coated substrate obtained through the processes described in Reference Example 1 was dipped in a neutralized aqueous solution (neutralized with 40% acetic acid; heating residue: 5%) of aminated tertiary polybutadiene (EC1800NA of Nippon Sekiyu Kagaku Co., Ltd.) and dried with air followed by baking at 170 °C.

The condition of the hardened coating obtained as to the presence or absence of the craters is listed in Table 1 together with the solubility parameters of various components.

Example 2

A substrate was treated as generally described in Example 1, with the exception that the aqueous solution (heating residue: 5%) of quaternary ammonium salt modified polybutadiene (EQ1800NP of Nippon Sekiyu Kagaku Co., Ltd.) was used instead of the aminated tertiary polybutadiene. The result is shown in Table 1.

Example 3

A substrate was treated as generally described in Example 1 with the exception that the neutralized aqueous solution (neutralized by 40% acetic acid; heating residue: 5% of polyoxyalkylene amine (Jeffermine D2000 of Mitsui-Texaco Co., Ltd.) was used instead of the aminated tertiary polybutadiene. The result is shown in Table 1.

Example 4

A substrate was treated as generally described in Example 1 with the exception that the neutralized aqueous solution (neutralized by 40% acetic acid; heating residue: 5% of aminated acrylic resin was used instead of the aminated tertiary polybutadiene. The result is shown in Table 1.

Example 5

| Component | Parts by weight |
|---|---|
| Polyoxylalkylene amine | 1381.8 |
| Epotohto YD011[4] | 513.2 |
| Butylcellosolve | 334.4 |
| 50% Lactic acid | 97.9 |
| Deionized water | 3246.0 |

4): Epoxy resin manufactured by Toto Kasei Co., Ltd.

The polyoxyalkylene amine, epoxy resin (Epotohto YD011) and butylcellosolve were charged in a 3 liter beaker with a cooling pipe and dissolved by slowly raising the temperature 130 C. After 3 hours, the viscosity of the varnish was X-Y in terms of Gartner-Holt viscometer. This varnish was added dropwise to the mixed solution of 50% lactic acid and demineralized water and stirred for one and a half hours to obtain the emulsion having 34.5% solid content. This emulsion was diluted to 5% emulsion to obtain the neutralized aqueous solution.

A substrate was treated as generally described in Example 3 with the exception that the neutralized solution obtained above was employed. The result is shown in Table 1.

Example 6

| Component | Parts by weight |
|---|---|
| Bolybutadiene B-1500[5] (Nippon Oil Co., Ltd.) | 1,000 |
| Antigen 6C | 10 |
| Maleic anhydride | 250 |
| Deionized water | 45 |
| Diethylamine | 0.5 |
| Ethylcellosolve | 340 |

5): Polybutadiene manufactured by Nippon Sekiyu Kagaku Co., Ltd.

The polybutadiene B-1500 (Nippon Oil Co., Ltd.) was charged in a 2 liter beaker with a cooling pipe, to which antigen 6C and maleic anhydride were then added. They were stirred while the temperature was kept within 190 °C to 200 °C to effect an addition reaction of maleic acid to polybutadiene. After 5 hours, the completion of this reaction was confirmed by a color reaction of the dimethyl aniline. Then, the mixture of deionized water and diethylamine was dropped into it over about 30 minutes, and the mixture was stirred for about one and a half hours. Then, ethylcellosolve was added to it, and the mixture was stirred for another one and a half hours to complete reaction. The acid value of the polybutadiene maleate obtained was measured with a potential-difference titrator (N/10KOH ethanol solution). The solution was neutralized by 60% and diluted to 5% aqueous solution.

Before baking the electrodeposited coating obtained by the procedure of reference example 2, the coating was dipped in said 5% aqueous solution and dried. Then, the coating was baked for 20 minutes at 160°C.

The condition of the coating was evaluated in the manner similar to that of embodiment 1, and the result is shown in Table 1.

## Example 7

| Component | Parts by weight |
|---|---|
| Methyl methacrylate | 1.6 |
| Styrene | 89.2 |
| Acrylic acid | 9.2 |
| Di-t-butylperoxide | 1.0 |
| Lauryl mercaptan | 0.5 |
| Xylene | 25.0 |
| Methyl isobutyl ketone | 25.0 |
| Butylcellosolve | 50.0 |

Xylene, methyl isobutyl ketone and butylcellosolve, 100 parts in total, were put in a 300cc beaker and heated to 80 °C. Then, the mixture of methyl methacrylate, styrene, acrylic acid, di-t-butyl peroxide and lauryl mercaptan were dropped into said mixture for 30 minutes. After completing the dropping, the mixture was slowly heated to 100 °C, and the reaction was completed in about 2 hours.

In the above case, the resin liquid has a heating residue of 49.8% and an acid value of 60 per solid resin.

Said liquid was neutralized with diethyl amine (85%) and diluted with water to obtain the water-dispersed liquid having 5% solid resin content.

A substrate was treated as generally described in Example 6 with exception that the neutralized aqueous solution obtained above was employed. The result is shown in Table 1.

## Comparative Example 1

A substrate was treated as generally described in Example 1 with the exception that the neutralized aqueous solution of low-molecular-weight polyoxyalkylene amine (Jeffermine D400 of Mitsui-Texaco Chemical Co., Ltd.) was used instead of the aminated tertiary polybutadiene. The result is shown in Table 1.

## Table 1

| Examples (Comparative Examples) | $SP_1$ | $SP_2$ | $SP_3$ | Difference between $\|SP_1 - SP_2\|$ and $\|SP_1 - SP_3\|$ | Crater (Cissing) |
|---|---|---|---|---|---|
| 1 | 9.9 | 11.8 | 8.8 | 1.9 > 1.1 | Good |
| 2 | 9.9 | 11.8 | 10.3 | 1.9 > 0.4 | Good |
| 3 | 9.9 | 11.8 | 10.4 | 1.9 > 0.5 | Good |
| 4 | 9.9 | 11.8 | 10.9 | 1.9 > 1.0 | Good |
| 5 | 9.9 | 11.8 | 10.4 | 1.9 > 0.5 | Good |
| 6 | 9.9 | 11.2 | 9.9 | 1.3 > 0 | Good |
| 7 | 9.9 | 11.2 | 10.0 | 1.3 > 0.1 | Good |
| Comparative Example 1 | 9.9 | 11.8 | 12.7 | 1.9 < 2.8 | Poor |
| Reference Example 1 | 9.9 | 11.8 | — | — | Poor |
| 2 | 9.9 | 11.2 | — | — | Poor |

Good: No craters or number of craters is extremely small.
Poor: There are a number of craters.

## Claims

1. A process for electrodeposition coating characterized in that a substrate electrocoated in an electrodeposition bath is subjected to a contact with an aqueous solution containing a crater-preventive material satisfying the following formula:

$$|SP_1 - SP_2| > |SP_1 - SP_3| \quad (1)$$

wherein $SP_1$ is a solubility parameter of a crater-causing material; $SP_2$ is a solubility parameter of a film-forming material; and $SP_3$ is a solubility parameter of a crater-preventive material, before baking.

2. The process defined in claim 1, wherein said crater-preventive material satisfies the following formula:

$$|SP_1 - SP_3| < 1 \quad (2)$$

3. The process defined in claim 1 or claim 2, wherein said crater-preventive material is a water-solubilized polybutadiene, a water-solubilized acrylic resin, a water-solubilized polyoxyalkylene, a water-solubilized modified epoxy resin or a water-solubilized aliphatic epoxy compound.

4. The process defined in claim 1 or claim 2, wherein the electrodeposition coating is a cationic electrodeposition coating.

5. The process defined in claim 1, wherein the crater-preventive material is present in an aqueous solution in an amount of from 0.05 to 40 % by weight.

6. The process defined in claim 5, wherein the crater-preventive material is present in an aqueous solution in an amount of from 0.05 to 10 % by weight.

## DOCUMENTS CONSIDERED TO BE RELEVANT

EP 87111400.5

| Category | Citation of document with indication, where appropriate, of relevant passages | Relevant to claim | CLASSIFICATION OF THE APPLICATION (Int. Cl.4) |
|---|---|---|---|
| A | AT - B - 375 085 (VIANOVA KUNST-HARZ AKTIENGESELLSCHAFT) <br> * Claims; page 2, lines 1-11 * <br> ---- | 1 | C 25 D 13/10 <br> C 25 D 13/06 <br> C 09 D 5/44 |
| | | | **TECHNICAL FIELDS SEARCHED (Int. Cl.4)** |
| | | | C 25 D <br> C 09 D |

The present search report has been drawn up for all claims

| Place of search | Date of completion of the search | Examiner |
|---|---|---|
| VIENNA | 30-10-1987 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82